(19) Europäisches Patentamt
European Patent Office
Office européen des brevets

(11) Numéro de publication: **0 010 008**
**B1**

(12) **FASCICULE DE BREVET EUROPEEN**

(45) Date de publication du fascicule du brevet: **19.01.83**

(51) Int. Cl.³: **C 08 L 27/06**, C 08 K 5/00, C 08 K 5/37

(21) Numéro de dépôt: **79400582.7**

(22) Date de dépôt: **21.08.79**

(54) **Perfectionnement à la stabilisation de résines halogénovinyliques.**

(30) Priorité: **29.08.78 FR 7824863**
**11.05.79 FR 7912005**

(43) Date de publication de la demande:
**16.04.80 Bulletin 80/8**

(45) Mention de la délivrance du brevet:
**19.01.83 Bulletin 83/3**

(84) Etats contractants désignés:
**BE DE GB IT LU NL**

(56) Documents cités:
**BE - A - 866 428**
**FR - A - 1 476 137**
**GB - A - 827 393**
**US - A - 2 460 436**
**US - A - 4 035 337**

(73) Titulaire: **SOCIETE NATIONALE ELF AQUITAINE**
**Tour Aquitaine**
**F-92400 Courbevoie (FR)**

(72) Inventeur: **Chenard, Jean-Yves**
**3 rue Ramon de Carbonnières**
**F-64000 Pau (FR)**
Inventeur: **Mendelsohn, Jean-Claude**
**Le Petit Jugla**
**F-64390 Sauveterre de Bearn (FR)**

(74) Mandataire: **Kohn, Armand**
**5 Avenue Foch**
**F-92380 Garches (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 010 008 B1

# Perfectionnement à la stabilisation de résines halogéno-vinyliques

L'invention, exposée dans la description qui suit, concerne la stabilisation de résines halogéno-vinyliques vis-à-vis de la chaleur; elle vise, plus particulièrement, un perfectionnement de la stabilisation par adjonction de dérivés métalliques, notamment de ceux de l'étain, de l'antimoine, du zinc, du magnésium ou d'autres métaux alcalino-terreux ou alcalins. L'invention se rapporte notamment à des adjuvants qui, conjointement avec des composés métalliques, rendent les résines plus résistantes à la chaleur et aux chocs, ainsi que plus stables à la lumière; elle comprend également un procédé de préparation de ces adjuvants.

Etant donné l'importance considérable des résines vinyliques, surtout celles du chlorure de polyvinyle, la stabilisation de ces résines a fait l'objet de nombreux travaux. Il était en effet nécessaire d'empêcher les effets nuisibles que le chauffage exerce sur les polymères halogéno-vinyliques, pour pouvoir effectuer, avec sécurité, les diverses opérations de formage à chaud de ces matières plastiques. Le stabilisation par adjonction de différents composés stanniques est bien connue et a donné lieu à une abondante littérature. Les composés qui ont donné beaucoup de satisfaction sont des dérivés organiques contenant à la fois de l'étain et du soufre; cependant, comme ils ne permettant pas de faire varier le rapport Sn/S, suivant les besoins, on a tendance à les remplacer par des mélanges de composés stanniques avec des adjuvants organiques, le plus souvent soufrés. Ainsi, a-t-on proposé de nombreux systèmes constitués par un mélange d'un ou de plusieurs composés de l'etain avec des mercapto ou thio composés. Par exemple, selon le brevet allemand 1 217 609, le stabilisant est composé d'un mélange de mono- ou di-organo étain avec un mercapto ester; le brevet US 3 063 963 utilise un mercapto acide ou un mercapto alcool avec un composé di-organo stannique; ces composés sont remplacés par un thio-éther, conformément au brevet US 3 297 629. D'autres brevets décrivent l'adjonction de substances telles que thio-anhydrides, mercaptols, mercaptals, mercaptans aliphatiques ou di-sulfures organiques. D'une façon générale, lorsque l'adjuvant renferme une fonction mercaptan, d'après l'art antérieur, l'atome de soufre se trouve toujours dans le reste d'acide, c'est-à-dire dans la chaîne liée à l'atome de carbone du groupe carboxylique.

Or, les différents systèmes, proposés jusqu'à présent, présentent des inconvénients soit du fait de leur efficacité insuffisante, commo c'est le cas des sulfures ou di-sulfures, ou de l'odeur trop marquée, comme cela a lieu avec les esters de l'acide thio-glycolique, avec des mercapto alcools et autres, soit à cause de la cherté des produits utilisés, en particulier dans le cas des anhydrides de thio-acides.

La présente invention résulte de la constatation inattendue que les inconvénients sus-indiqués peuvent être supprimés, et que l'on peut obtenir une excellente stabilisation des résines renfermant un halogène, notamment halogéno-vinyliques, par l'application de certains adjuvants, différents de ceux dont l'emploi a été suggéré jusqu'à présent. Les demandeurs ont trouvé qu'il est possible d'avoir, avec un prix de revient suffisamment bas, des esters soufrés, très efficaces en application conjointe avec des composés métalliques, et ne dégageant aucune odeur; de plus, ces nouveaux adjuvants ont un effet plus favorable sur la viscosité de la résine aux températures de travail, que d'autres systèmes stabilisants connus. Ils permettent également une bonne lubrification du produit au cours du travail, en facilitant le glissement de la résine. Les résines renfermant un halogène, auxquelles s'applique l'invention, peuvent être des homopolymères comme par exemple chlorure de polyvinyle, chlorure de polyvinylidène, polychloro-trifluoroéthylène, polytétrafluoroéthylène, polychloroéther, polydichloro-styrène, des copolymères tels qu'acétochlorure de polyvinyle, ou bien des combinaisons ou mélanges divers, par exemple des chlorures de polyvinyle modifiés par de l'éthylène ou/et du propylène, par de l'actylonitrile-butadiène-styrène, de l'éthylène-acétate de vinyle et similaires.

Les nouveaux adjuvants, suivant l'invention, sont des esters organiques d'alkyle renfermant un groupe mercapto dans le reste d'alcool de l'ester. Ces composés peuvent être représentés par la formule générale:

$$RCOO—R'SH$$

dans laquelle R est un alkyle ou alkényle, linéaire, ou ramifié, aryle ou aralkyle, renfermant au moins deux atomes de carbone, de préférence 6 à 38, et mieux 8 à 18, ce radical pouvant d'ailleurs porter un second groupe carboxylique combiné ou non avec un second groupement —R'SH; R' désigne un alkylène en $C_2$ à $C_{18}$, plus particulièrement en $C_2$ à $C_6$, cet alkylène pouvant avantageusement porter un ou plusieurs —OH.

Ainsi, contrairement aux différents mercapto-esters de l'art antérieur, dans lesquels la fonction —SH se trouve dans le reste d'acide, c'est-à-dire dans la chaîne qui correspondrait au R de la formule ci-dessus, les produits suivant l'invention sont caractérisés en ce qu'ils portent leur groupe mercapto dans le reste de l'alcool, c'est-à-dire sur le chaîne R'. Il est surprenant que, grâce à cette différence de position du —SH, l'activité de l'ester vis-à-vis des stabilisants stanniques soit profondément modifiée, au point de supprimer les inconvénients notés plus haut et procurer une efficacité remarquable. A cela s'ajoutent les avantages de la facilité de préparation et de purification de ces corps, ainsi que de l'absence d'odeur.

Bien que le radical R, dans les esters suivant l'invention, puisse pratiquement appartenir à tout mono- ou di-acide aliphatique, les esters préférés dérivent des acides gras, notamment caprylique, pélargonique, caprique, undécanoîque, laurique, myristique, palmitique, stéarique, isostéariques, ou d'un mélange de tels acides; ainsi d'excellents stabilisants sont obtenus par adjonction d'un mélange des esters palmitique et stéarique d'un alkylène-mercaptan à un stabilisant stannique de type connu. Conviennent également des esters d'acides aryliques, par exemple benzoîque, benzylique, phényl-acétique, phényl-propionique.

Comme mentionné plus haut, l'ester, suivant l'invention, peut être un mono- ou di-ester d'un di-acide carboxylique; conviennent par exemple les esters des acides succinique, adipique, di-oléique, phtalique.

Le reste d'alcool qui, selon l'invention, est un reste de mercapto alcool, peut dériver de différents mono- ou poly-alcools porteurs d'un groupe thiol, par exemple

$HO—CH_2CH_2SH$

$HO—CH_2CH_2CH_2SH$

$HO—CH_2CH—CH_2SH$
|
OH

$HO—(CH_2)_4—SH$

ces exemples n'étant nullement limitatifs. Pratiquement, pour des raisons économiques, conviennent particulièrement bien les esters de mercapto-éthyle et ceux de thio-glycéryle, c'est-à-dire esters dont le groupe —R'SH est respectivement

$—CH_2CH_2SH$

et $—CH_2CH—CH_2SH$
|
OH

Plus la masse moléculaire de l'ester est élevée et plus la tension de vapeur de ce composé est faible, ce qui diminue tout risque d'odeur.

L'adjonction des esters, suivant l'invention, aux composés stanniques permet de réduire très sensiblement la quantité nécessaire de ces derniers, ce qui constitue une économie appréciable; cette économie peut aller de 20 jusqu'à 95% de la quantité d'étain à mettre en oeuvre par rapport à la stabilisation avec des composés de l'étain seuls.

L'invention donne également d'excellents résultats dans la stabilisation des résines halogéno-vinyliques, avec des systèmes stabilisants du polychlorure de vinyle, autres que les stabilisants à base d'étain; conviennent particulièrement bien les systèmes tels que les dérivés des métaux alcalins (sodium, potassium), des métaux alcalino-terreux (calcium, barium) et d' autres métaux, tels que magnésium, zinc, antimoine, ou leurs mélanges entre eux, ou avec divers additifs; ces additifs peuvent être particulièrement des époxydes, par exemple huile de soja époxydée, des phosphites, notamment triphényl phosphites et des antioxydants comme -tert-butyl catéchol. Lors-qu'on utilise les métaux alcalins et alcalino-terreux et/ou le zinc, les dérivés métalliques qui conviennent particulièrement bien sont les carboxylates. On peut citer de façon non limitative les: laurate, stéarate, benzoate, caproate, caprylate, 2-éthyl-hexanoate, naphténate, néoalcanoate, oléate. Cependant, un certain nombre de dérivés tels que les carbonate, oxyde, sulfate peuvent également être avantageusement utilisés.

Lorsque l'antimoine est choisi comme métal, des résultats particulièrement avantageux sont obtenus, lorsque les adjuvants R—COOR'SH sont employés conjointement avec les trimercaptides d'antimoine, ces trimercaptides pouvant être dérivés des mercaptans aliphatiques, des esters de mercaptoacides, ou des esters de mercaptoalkyles.

Les dérivés métalliques et/ou les additifs peuvent être incorporés à la résine en des proportions pouvant varier entre 0,01 à 5% du poids de la résine mise en oeuvre. Les esters R—COOR'SH peuvent être utilisés dans des proportions variant entre 0,1 à 5% du poids de la résine, et surtout entre 0,5 et 2%.

L'application des mélanges stabilisants selon l'invention permet, à proportion de stabilisant identique, d'économiser de 20 à 95% de la quantité de dérivés métalliques nécessaires, par rapport aux mêmes dérivés métalliques employés sans les adjuvants R—COOR'SH.

Les nouveaux adjuvants permettent de réduire la coloration des résines pendant le chauffage; ils permettent également de contrecarrer l'augmentation de la viscosité que provoque l'adjonction de stabilisants à l'étain; ces deux effets peuvent être obtenus simultanément. C'est un avantage important, d'autant plus que les stabilisants connus à l'étain ne sont pas capables en général de produire ces deux effets ensemble; certains d'entre eux sont surtout efficaces pour réduire la coloration et d'autres pour régler la viscosité. Il est remarquable que ces résultats puissent être obtenus aussi bien avec des

dérivés mono- ou di-organiques de l'étain, avec des sels d'étain ne contenant pas de soufre qu'avec ceux qui renferment ce dernier, ou avec leurs mélanges.

Les neuveaux adjuvants peuvent être incorporés à la résine après la polymérisation, mais avant le séchage du polymère, ou bien au moment de la mise en oeuvre de celui-ci.

Les nouveaux adjuvants peuvent être préparés par l'action directe d'un acide aliphatique sur un mercapto-alcanol, en présence d'un acide, au sein d'un hydrocarbure servant de solvant.

L'invention est illustrée non limitativement par les exemples qui suivent.

Exemple 1

Synthèse du stéarate de mercapto-éthyle $CH_3(CH_2)_{16}CO_2CH_2CH_2SH$

Dans un ballon de 1 l, muni d'un dispositif d'agitation, d'un séparateur DEANSTARK et d'un réfrigérant, on introduit 284g, c'est-à-dire 1 mole, d'acide stéarique, 86 g, soit 1,1 mole de mercapto-2-éthanol, 0,8 g d'acide p-toluène sulfonique et 200 ml de benzène. Le tout est chauffé sous azote jusqu'à établissement d'un bon reflux, sans dépasser 100° dans le liquide. On continue à chauffer sous reflux, pendant environ 6 h, pour effectuer l'estérification de l'acide stéarique. 200 ml de benzène sont alors ajoutés au milieu réactionnel; après refroidissement, celui-ci est lavé deux fois avec 100 ml d'eau, chaque fois.

Le benzène est évaporé sous pression réduite, ce qui laisse 330 g d'ester brut de stéarate de mercapto-éthyle; ce dernier titre 9,2% SH contre 9,6 théoriques.

Exemple 2

Synthèse du myristate de thio-3-glycéryle 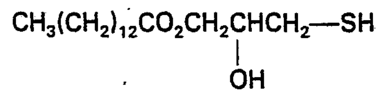

Le mode opératoire de l'exemple 1 est appliqué à 228 g, soit 1 mole, d'acide myristique auquel on ajoute 216 g, c'est-à-dire 2 moles, de thio-glycérol, 2 g d'acide p-toluène sulfonique et 500 ml de benzène.

L'estérification est arrêtée dès qu'une mole d'eau a été récupérée. Le milieu réactionnel est alors lavé trois fois avec 500 ml d'eau. Après l'évaporation du benzène sous pression, on recueille 322 g d'un ester de myristate de thio-3 glycéryle brut, titrant 8,4% SH contre 10,4% théoriques.

Exemples 3 à 6

Dans ces exemples, des échantillons de chlorure de polyvinyle, stabilisé avec l'adjuvant suivant l'invention, sont soumis à des essais de coloration au chauffage. Pour cela, on malaxe à 180°C, sur un mélangeur à rouleaux, une composition comprenant:

100 parties en poids de chlorure de polyvinyle, connu sous la dénomination commerciale LACQVYL S071S de coefficient de viscosité K=56

0,5 parties de cire "E" qui constitue le lubrifiant externe

x partie de stabilisant dont les nature et quantités sont indiquées dans chacun des exemples.

Les résultats obtenus sont comparés à ceux que l'on obtient avec le stabilisant classique, connu pour être efficace, le bis(iso-octyl-mercapto-acétate) de di-n.octyl-étain.

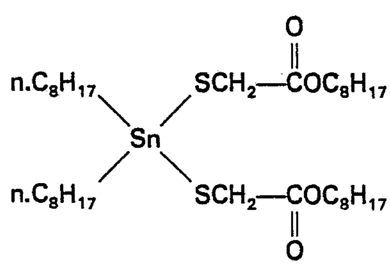

La coloration de la résine est observée dans chaque cas et 1' on note le temps en minutes au bout duquel s'est produit le commencement de la coloration et celui qui correspond au brunissement de l'échantillon.

Dans chacun des exemples de ce groupe, on donne un tableau des résultats, dans lequel sont indiquées les proportions pourcent en poids de stabilisant et d'adjuvant par rapport au chlorure de polyvinyle; deux autres colonnes indiquent les temps de coloration sus-mentionnés.

Exemple 3

Les essais sont effectués d'une part avec le stabilisant classique, dont la formule est donnée ci-dessus, en différentes proportions et, d'autre part, avec ce même stabilisant additionné de stéarate de mercapto-éthyle décrit dans l'exemple 1.

Les résultats suivants sont constatés.

| | % | Coloration Commencement | Coloration Brunissement |
|---|---|---|---|
| Stabilisant stannique seul | 0,07 | 2′ | 5′ |
| | 0,25 | 4′ | 9′ |
| | 0,35 | 7′ | 12′ |
| | 0,70 | 11′ | 25′ |
| Même stabilisant +stéarate de mercapto-éthyle | 0,07 / 1,00 | 4′ | 9′ |

On voit que l'adjonction de 1% de stéarate au chlorure de polyvinyle permet de réduire la coloration à 180° en présence de 0,07% seulement de stabilisant classique aussi bien que si on avait employé 0,25% de ce dernier seul. Il en résulte par conséquent une économie de 72% de stabilisant stannique cher, alors que le stéarate de mercapto-éthyle est un corps très peu coûteux. Cette économie est encore plus grande par rapport aux cas industriels, où l'on utilise 1% ou même plus de stabilisant stannique.

Exemple 4

Le stabilisant classique essayé ici est un polymère de condensation des acides butyl-stannoïque, et butyl-thiostanoïque pouvant être représenté par la formule

$$(BuSnO_{1,5})_m \cdot (BuSnS_{1,5})_n$$

| | % | Coloration Commencement | Coloration Brunissement |
|---|---|---|---|
| Stabilisant à l'étain seul | 0,1 | 8′ | 12′ |
| Stabilisant à l'étain seul | 0,02 | 4′ | 6′ |
| Même stabilisant +stéarate de mercapto-éthanol | 0,1 / 1,00 | 16′ | 25′ |
| Même stabilisant +même stéarate | 0,02 / 1,00 | 7′ | 12′ |
| Stéarate seul | 1,2 | immédiat | 3′ |

Ces résultats montrent l'effet très marqué du stéarate de mercaptoéthyle dans le sens du retardement de le coloration. Ainsi, avec 1% de stéarate, il suffit d'utiliser 0,02% de stabilisant stannique pour avoir une tenue aussi bonne qu'avec 0,1% de ce dernier; il y a donc un gain de 80% d'étain par l'utilisation du stéarate suivant l'invention.

La dernière ligne horizontale du tableau montre que l'effet de l'ester ajouté doit être dû à un phénomène de synergie inattendue, puisque le stéarate de mercapto-éthyle seul n'exerce aucune action retardatrice sur la coloration du chlorure de polyvinyle, à chaud.

Exemple 5

Le stabilisant classique essayé est l'acide butylstannoïque $BuSnO_2H$ et le stéarate ajouté est le même que dans les exemples précédents.

| | % | Coloration Commencement | Coloration Brunissement |
|---|---|---|---|
| $BuSnO_2H$ | 0,05 | immédiat | 10′ |
| $BuSnO_2H$ +stéarate | 0,05 / 1,00 | 12′ | 25′ |

Or avec de l'acide butyl-stannoïque seul, il n'est pas possible d'obtenir une stabilisation aussi bonne que celle que procure l'adjonction du stéarate. A noter que ce dernier résultat équivaut à celui que donnerait le stabilisant d'isooctyl-mercaptoacétate de formule donnée plus haut, à la dose de 0,7%; on réalise donc un gain de poids d'étain de plus de 75% par l' adjonction de stéarate.

Exemple 6

Le même stabilisant stannique qu'à l'exemple 5 est essayé conjointement avec du myristate de thio-3-glycéryle à raison de 0,05% du premier et 1% du second. La coloration commence après 5′ et le

brunissement au bout de 12'; il y a donc une amélioration très marquée du fait de l'adjonction de myristate, puisque l'acide butyl-stannoïque seul donnait lieu à un commencement immédiat de coloration et un brunissement après 10', comme on le voit dans l'exemple 5.

Au point de vue brunissement, le résultat avec le myristate est équivalent à celui du stabilisant stannique seul, de l'exemple 3, au taux de 0,35%.

Exemples 7 à 9

Ces exemples rendent compte des effets favorables des adjuvants, suivant l'invention, sur la viscosité du chlorure de polyvinyle. Les déterminations relatées sont effectuées au moyen de l'appareil Brabender connu, qui est un rhéomètre à couple de rotation. Cet appareil enregistre l'évolution du couple de malaxage de la résine à une température donnée, en fonction du temps (il est décrit, par exemple, dans Plastiques Modernes et Elastomères, Mars 1975).

Les mesures portent sur la résine de chlorure de polyvinyle connue sous la dénomination commerciale S.111 de constante de viscosité K=67. Le résine est additionnée de certains agents dans les proportions suivantes:

| | | |
|---|---|---|
| Chlorure de polyvinyle | 100 | parties en poids |
| $CaCO_3$ | 3 | " " |
| $TiO_2$ | 1 | partie en poids |
| Cire "E" | 0,8 | " " |
| Système stabilisant | | en les proportions indiquées dans les exemples. |

On opère à 200°C avec une vitesse de rotation du rotor du malaxeur de 60 t/mn.

Les courbes représentant le couple en m.kg en fonction du temps en minutes, à partir de la troisième minute, sont données sur les dessins annexés.

La figure 1 est un diagramme Brabender d'un mélange de stabilisants stanniques connus.

Fig. 2 est un diagramme similaire, obtenu avec les stabilisants de la figure 1 additionnés d'un adjuvant suivant l'invention.

Fig. 3 est un diagramme Brabender obtenu avec un autre stabilisant classique seul et additionné d'un adjuvent suivant l'invention.

Fig. 4 se rapporte à un troisième stabilisant de type connu.

Fig. 5 illustre les résultats de l'exemple 22.

Exemple 7

Le stabilisant de type connu est un mélange d'anhydride de l'acide butyl-thio-stannoïque avec du bis(iso-décyl-mercapto-acétate) de di-n.butyl-étain.

Sur le diagramme de la figure 1, on a tracé la courbe 1 Brabender du chlorure de polyvinyle avec 1,8% de mélange stabilisant sus-indiqué, tandis que la courbe 2 correspond à 0,9% du même stabilisant.

Sur la figure 2, les trois courbes correspondent à du chlorure de polyvinyle renfermant les pourcents suivants de ce même stabilisant classique avec, en plus, du stéarate de mercapto-éthyle.

| | Stabilisant | Stéarate |
|---|---|---|
| Courbe 3 | 0,9 | 1 |
| Courbe 4 | 0,9 | 2 |
| Courbe 5 | 0,45 | 2 |

On peut voir que les courbes de mélange contenant du stéarate, c'est-à-dire les courbes 3 à 5, présentent un palier systématiquement plus bas—de 15% environ—que les courbes 1 et 2 correspondant au stabilisant classique seul. Cela signifie que la puissance nécessaire au travail de la résine est plus faible, lorsque celle-ci contient un ester suivant l'invention; l'avantage an est évident, la cadence de production peut être augmentée.

Un autre résultat est qu'à teneur en étain égale, les systèmes contenant du stéarate (courbes 3 et 4) sont bien meilleurs en ce qui concerne la forme et la longueur du plateau des courbes enregistrées. Ainsi, la courbe 4 présente un palier aussi long que la courbe 1, ce qui veut dire que le système contenant 0,9% de stabilisant stannique et 2% de stéarate (courbe 4) est aussi bon que celui qui contient 1,8% du même stabilisant stannique seul (courbe 1); il y a donc, du fait de l'adjonction de stéarate, une économie de 50% sur le quantité d'étain utilisée.

De même, la courbe 5 est bien meilleure que la courbe 2, ce qui veut dire que 0,45% de stabilisant stannique avec 2% de stéarate donne des résultats meilleurs que 0,9% de stabilisant stannique seul.

On peut constater d'autre part que les courbes 3 et 5 sont équivalentes, ce qui veut dire que 0,9% de stabilisant avec 1% de stéarate (courbe 3) peuvent être remplacés par 0,45% de stabilisant

stannique.plus 2% de stéarate (courbe 5); donc au prix d'une augmentation de la teneur en stéarate, on peut encore économiser de l'étain. D'ailleurs, ces courbes 3 et 5 de sont pas très différentes de la courbe 1 à 1,8% de stabilisant stannique, qui sert de comparaison dans la présente étude.

Il est en outre à noter que les temps de gélification des mélanges selon l'invention sont semblables ou plus courts que ceux des compositions contenant seulement du stabilisant stannique connu.

Exemple 8

Le stabilisant de type connu, servant de terme de comparaison dans les essais illustrés par la figure 3, est le bis(isooctyl-mercapto-acétate) de di-n, butyl-étain.

La courbe 6 correspond à du chlorure de polyvinyle renfermant 2,2% de ce dérivé du butyl-étain, tandis que la courbe 7 est relative à un essai similaire, mais avec 1,1% seulement de ce stabilisant et 1% de stéarate de mercapto-éthyle.

On constate que les deux courbes sont pratiquement équivalentes, ce qui signifie qu'un gain de 50% sur la quantité de l'étain utilisé peut être réalisé grâce à l'adjonction de 1% de stéarate. On remarquera d'ailleurs que la courbe 7, suivant l'invention, est plus régulière, ce qui signifie pratiquement que le mélange se fait mieux.

Exemple 9

Ici les mesures portent sur le chlorure de polyvinyle décrit plus haut, additionné de stabilisant connu, constitué par un polymère de condensation des acides butyl-stannoïques et butyl-thio-stannoïques.

$$(BuSnO_{1,5})m \, . \, (BuSnS_{1,5})n$$

Sur la figure 4, la courbe 8 de Brabender correspond au chlorure de polyvinyle renfermant 0,37% de stabilisant ci-dessus, seul. La courbe 9 est celle de la même résine à laquelle en plus des 0,37% de ce stabilisant stannique connu, on a ajouté 1% de stéarate de mercapto-éthyle; la courbe 10 correspond à 0,19% de stabilisant stannique et 2% de stéarate. On voit que c'est cette dernière qui est la meilleure de toutes, ce qui veut dire qu'avec environ moitié de stabilisant stannique, on peut obtenir des résultats bien meilleurs si l'on ajoute suffisamment de stéarate.

Exemple 10

Des measure, analogues à celles de l'exemple 7, ont été effectuées avec du palmitate de mercapto-éthyle comme adjuvant du stabilisant stannique, à la place du stéarate correspondant.

Les courbes Brabender présentaient alors la même forme que les courbes 3 à 5 de la figure 2 et étaient quantitativement très voisines de ces dernières. Ainsi, avec 1% de palmitate de mercaptoéthyle et 0,9% de stabilisant stannique, on trouve un couple de 1,4 m.kg à 20 minutes.

Exemple 11

Le palmitate de l'exemple 10 étant remplacé par du myristate de mercapto-éthyle, les diagrammes Brabender ont encore la même forme; à 20 minutes on trouve un couple de 1,35 m.kg.

Exemples 12 à 14

Dans ces exemples des échantillons de chlorure de polyvinyle, renfermant différents stabilisants, sont soumis à des essais de coloration au chauffage. Pour cela on malaxe pendant 5 minutes à 180°C, sur une calandreuse, une composition comprenant:

- 100 parties en poids de chlorure de polyvinyle, connu sous la dénomination commerciale LACQVYL S/071/S de coefficient de viscosité K=56,
- x parties stabilisant,
- 0,5 parties de cire "E" (ester de l'acide montanique), qui constitue le lubrifiant externe. La feuille de PVC, ainsi obtenue, est découpée en plaquettes de 2×1 cm. Ces plaquettes sont chauffées à 204°C dans une étuve à thermostat et elles sont prélevées toutes les 5 minutes.

La couleur des échantillons prélevés varie selon le stabilisant utilisé, et le temps.

Les résultats sont consignés dans les tableaux ci-dessous.

Exemple 12

Stabilisant x: { 0,6 parties de stéarate de calcium ; 0,4 parties de stéarate de zinc }

| Temps de chauffage à 204°C (en mn) | 0 | 5 | 10 |
|---|---|---|---|
| Couleur: | rose | jaune | noir |

Exemple 13

Stabilisant x:
- 0,6 parties stéarate calcium
- 0,4 parties stéarate zinc
- 1 parties stéarate de mercaptoéthyle

| | | | |
|---|---|---|---|
| Temps de chauffage à 204°C (en mn) | 0 | 5 | 10 |
| couleur | blanc | jaune très clair | noir |

Exemple 14

Stabilisant x:
- 0,6 parties stéarate calcium
- 0,4 parties stéarate zinc
- 2 parties stéarate de mercaptoéthyle

| | | | |
|---|---|---|---|
| Temps de chauffage à 204°C (en mn) | 0 | 5 | 10 |
| Couleur: | blanc | blanc | noir |

Ces tableaux mettent en évidence que l'addition du stéarate de mercaptoéthyle améliore la coloration initiale du chlorure de polyvinyle, après 5 minutes de chauffage. Par contre, la décomposition brutale du chlorure de polyvinyle après 10 minutes de chauffage, décomposition liée à la présence de zinc, n'est pas améliorée.

Exemples 15 et 16

On opère comme dans les exemples précedents, mais en ajoutant dans le mélange de l'huile de soja époxydée.

Exemple 15

Stabilisant x:
- 0,6 parties stéarate calcium
- 0,4 parties stéarate zinc
- 4 parties huile de soja époxydée

| | | | | | |
|---|---|---|---|---|---|
| Temps de chauffage à 204°C (en mn) | 0 | 5 | 10 | 15 | 20 |
| Couleur | rose | jaune | brun jaune | brun | noir |

Exemple 16

Stabilisant x:
- 0,6 parties stéarate calcium
- 0,4 parties stéarate zinc
- 4 parties huile de soja époxydée
- 1 parties stéarate de mercaptoéthyle

| | | | | | |
|---|---|---|---|---|---|
| Temps de chauffage à 204°C (en mn) | 0 | 5 | 10 | 15 | 20 |
| Couleur | blanc | jaune très clair | jaune clair | jaune | noir |

L'introduction de stéarate de méthyle améliorenttement la stabilité à la coloration.

Exemples 17 à 21

On opère comme dans les exemples précédents, mais avec des dérivés de l'antimoine à la place de ceux du calcium ou du zinc.

Le stabilisant est soit du $Sb(SCH_2CO_2\text{-isooctyle})_3$ dénommé sous forme abrégée $Sb(IOTG)_3$ utilisé seul, soit un mélange de ce sel d'antimoine avec des proportions variables de stéarate de mercapto-éthyle.

La coloration de la résine est observée dans chaque cas, et 1' on note le temps en minutes au bout duquel s'est produit le commencement de la coloration et celui qui correspond au brunissement de l'échantillon.

Dans chacun des exemples on donne un tableau des résultats, dans lesquels sont indiquées les proportions pour cent en poids des produits qui composent le stabilisant, par rapport au chlorure de polyvinyle.

| Stabilisant | x parties | jaune clair mn | jaune foncé mn |
|---|---|---|---|
| Sb $(IOTG)_3$ ex. 17 | 0,07 | 2 | 12 |
| Sb $(IOTG)_3$ ex. 18 | 0,17 | 4 | 18 |
| Sb $(IOTG)_3$ ex. 19 | 0,35 | 8 | 27 |
| Sb $(IOTG)_3$ ex. 20 | 0,07 | 6 | 38 |
| +stéarate de M.E. | 2 | — | — |
| Sb $(IOTG)_3$ ex.21 | 0,17 | — | — |
| +stéarate de M.E. | 1 | 8 | 35 |

Ce tableau permet de constater que le degré de stabilisation, obtenu avec 0,07 parties de Sb $(IOTG)_3$ et 2 parties de stéarate de mercaptoéthyle, est pratiquement équivalent à celui que 1' on obtient avec 0,35 parties de Sb $(IOTG)_3$ seul. Il a donc été possible, pour un même résultat, d'utiliser 5 fois moins d'antimoine.

Exemple 22

Cet exemple rend compte des effets favorables des compositions stabilisantes selon l'invention, sur la viscosité du chlorure de polyvinyle. Les déterminations relatées sont effectuées au moyen de l'appareil Brabender connu, à l'aide duquel on mesure l'évolution dans le temps de la viscosité d'une résine de chlorure de polyvinyle.

Les mesures portent sur le résine de chlorure de polyvinyl connue sous la dénomination commerciale S111 de constante de viscosité K=67. La résine est additionnée de certains agents stabilisants dans les proportions suivantes:

| | |
|---|---|
| Chlorure polyvinyle | 100 parties en poids |
| $TiO_2$ | 1 parties en poids |
| $CaCO_3$ | 3 parties en poids |
| Cire E | 0,8 parties en poids |
| Stéarate de mercaptoéthyle | x parties en poids |

Les essais sont réalisés à 200°C avec une charge de chlorure de polyvinyle de 50 g; la vitesse de rotation de l'appareil Brabender est fixée à 60t/mn. Les courbes de la figure 5 représentent le couple en m.kg en fonction du temps en minutes.

La courbe 1 correspond au mélange sans stéarate de mercaptoéthyle, la courbe 2 à un mélange contenant 1 partie de ce stéarate et la courbe 3 à un mélange renfermant 2 parties de stéarate de mercaptoéthyle.

On peut remarquer que la durée du plateau viscosimétrique est considérablement augmentée par adjonction de stéarate de mercaptoéthyle, ce qui constitue un très grand avantage pour la transformation du PVC. Il n'est pas possible d'obtenir une telle amélioration par la seule augmentation de $CaCO_3$.

Exemple 23

Cet exemple, conduit à l'échelle industrielle, illustre l'intérêt des mélanges stabilisants selon l'invention pour la fabrication de bouteilles en chlorure de polyvinyle (PVC) par extrusion soufflage. La machine utilisée est de marque "HESTA". Le dérivé organostannique employé est l'anhydride mixte des acides butylstannoïque et butyl thio-stannoïque déjà cité plus haut dans l'exemple 15.

On a opéré sur les formulations suivantes, dans lesquelles les quantités sont des parties en poids.

| Formulation n° | 1 | 2 | 3 | 4 | 5 | 6 |
|---|---|---|---|---|---|---|
| PVC S 071 S | 100 | 100 | 100 | 100 | 100 | 100 |
| "Paraloïd K 175" (marque de fabrique) lubrifiant interne de la Société Rohm et Haas) | 0,5 | 0,5 | 0,5 | 0,5 | 0,5 | 0,5 |
| Cire E | 0,5 | 0,5 | 0,5 | 0,5 | 0,5 | 0,5 |
| Stéarate de mercapto-éthyle | — | 1 | 0,5 | 1 | 0,5 | — |
| Dérivé stannique | 0,3 | 0,2 | 0,2 | 0,1 | 0,1 | 0,2 |
| "Loxiol G-12" (marque de fabrique; lubrifiant externe) | — | — | — | — | — | 1 |

L'azurant, généralement utilisé dans les formulations de ce type, a été volontairement supprimé, pour juger de la couleur réelle du PVC. On a réalisé trois passages successifs sur la machine avec le même PVC, en concassant et recyclant les bouteilles. Le classement par ordre d'efficacité stabilisante est le suivant:

formules 2 et 3, résultats sensiblement meilleurs que pour formule 4;
cette dernière est meilleure que 6;
la 6 est meilleure que 5, celle-ci étant à peu près équivalente au témoin 1.

On constate que, par rapport à la formulation témoin (n° 1), on peut réduire la teneur en Sn au tiers de sa valeur en lui ajoutant 0,5 parties de stéarate de mercaptoéthyle (formulation 5), à degré de stabilisation constant. Les formulations 2, 3 et 4, contenant une proportion d'étain inférieure, respectivement de 1/3 et de 2/3 à celui de la formulation 1, donnent des résultats nettement supérieurs.

La formulation 6, où le stéarate de mercaptoéthyle a été remplacé par un lubrifiant, confirme que le rôle du stéarate n' est pas simplement de lubrifier, mais qu'il intervient directement sur la couleur du PVC.

**Revendications**

1. Procédé de stabilisation à la chaleur, aux chocs et à la lumière de résines renfermant un halogène, par adjonction d'un ou de plusieurs composés métalliques, qui consiste à incorporer en outre à la résine un adjuvant organique, non métallique, à fonction mercaptan, caractérisé en ce que cet adjuvant est un mono- ou di-ester d'acide organique, dans lequel la fonction mercaptan libre est portés par un atome de carbone du reste alcool de 1' ester.

2. Procédé suivant la revendication 1, caractérisé en ce que l'ester à fonction mercaptan libre est du type

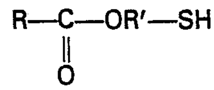

où R est un alkyle ou alkényle en $C_8$ à $C_{18}$, tandis que R' désigne un alkylène en $C_2$ à $C_6$.

3. Procédé suivant la revendication 2, caractérisé en ce que l'alkylène R' porte un hydroxyle.

4. Procédé suivant la revendication 2, caractérisé en ce que le groupe

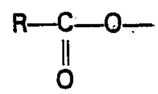

est un reste d'acide gras, de préférence caprylique, pélargonique, caprique, undécanoïque, laurique, myristique, palmitique ou stéarique.

5. Procédé suivant la revendication 1, caractérisé en ce que le diester est du type

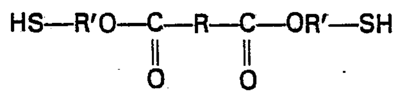

où R est un alkényle en $C_2$ à $C_{18}$ ou un aryle en $C_6$, R' est un alkényle en $C_2$ à $C_6$.

**Patentansprüche**

1. Verfahren zur Stabilisierung von ein Halogen enthaltenden Harzen gegenüber Wärme, Schock und Licht durch Zusatz einer oder mehrerer Metallverbindungen, das darin besteht, dem Harz außerdem einen organischen nicht-metallischen Zusatz mit Mercaptan-Funktion zuzusetzen, dadurch gekennzeichnet, daß dieser Zusatz ein Mono- oder Diester einer organischen Säure ist, worin die freie Mercaptan-Funktion von einem Kohlenstoffatom des Alkoholrestes des Esters getragen wird.

2. Verfahren nach Anspruch 1, dadurch gekennzeichnet, daß der Ester mit freier Mercaptan-Funktion vom Typ

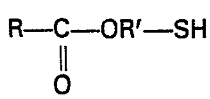

ist, worin R ein Alkyl oder Alkenyl mit $C_8$ bis $C_{18}$ ist, wohingegen R' ein Alkylen mit $C_2$ bis $C_6$ bedeutet.

3. Verfahren nach Anspruch 2, dadurch gekennzeichnet, daß das Alkylen R' ein Hydroxyl trägt.

4. Verfahren nach Anspruch 2, dadurch gekennzeichnet, daß die Gruppe

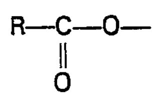

ein Fettsäurerest, vorsugsweise ein Caprylsäure-, Pelargonsäure-, Caprinsäure-, Undecansäure-, Laurinsäure-, Myristinsäure-, Palmitinsäure- oder Stearinsäurerest ist.

5. Verfahren nach Anspruch 1, dadurch gekennzeichnet, daß der Diester vom Typ

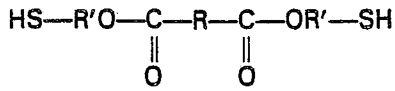

ist, worin R ein Alkenyl mit $C_2$ bis $C_{18}$ oder ein Aryl mit $C_6$ ist, und R′ ein Alkylen mit $C_2$ bis $C_6$ ist.

**Claims**

1. Process of stabilisation to heat, shock and light resins comprising a halogen, by the addition of one or more metal compounds, which consists in also incorporating into the resin a non-metal-containing organic additive having a mercaptan function, characterised in that this additive is a mono- or di-ester of an organic acid, in which the free mercaptan function is carried by a carbon atom of the alcohol group of the ester.

2. Process according to claim 1, characterised in that the ester having a free mercaptan function is of the

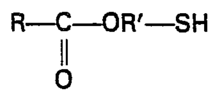

type, where R is a $C_8$ to $C_{18}$ alkyl or alkenyl group, while R′ designates a $C_2$ to $C_6$ alkylene group.

3. Process according to claim 2, characterised in that the alkylene group R′ carries a hydroxyl group.

4. Process according to claim 2, characterised in that the

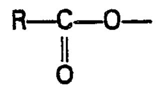

group is a fatty acid radical, preferably caprylic, pelargonic, capric, undecanoic, lauric, myristic, palmitic or stearic.

5. Process according to claim 1, characterised in that the diester is of the type

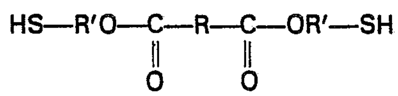

wherein R is a $C_2$ to $C_{18}$ alkenyl group or a $C_6$ aryl group, R′ being a $C_2$ to $C_6$ alkylene group.

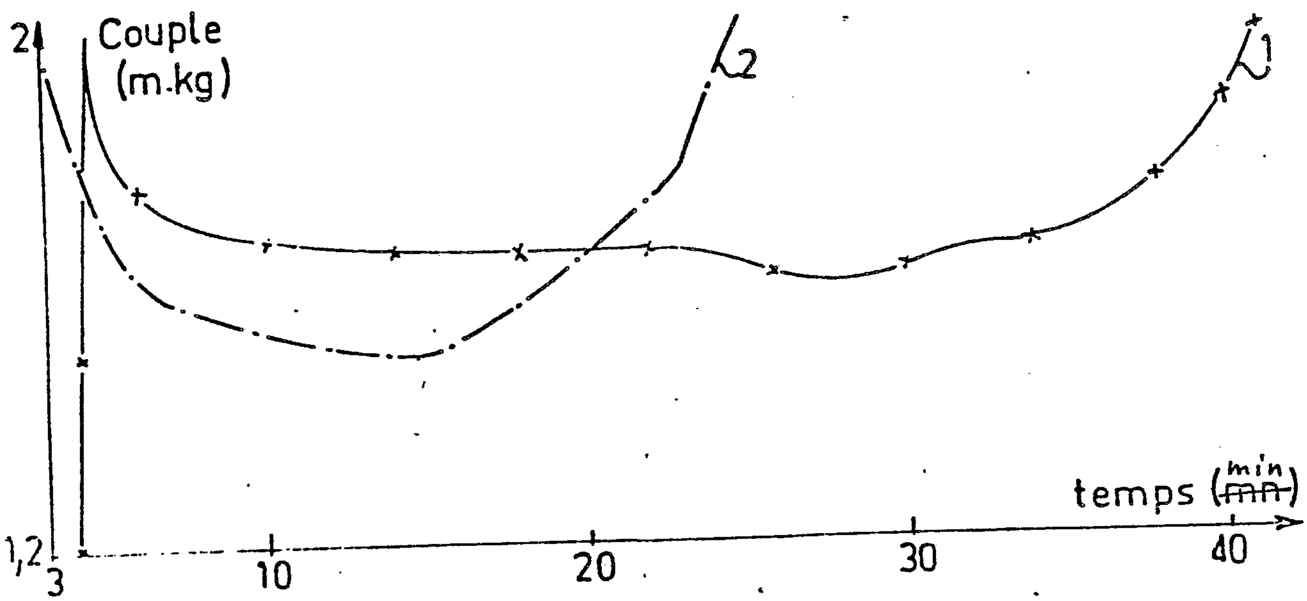

2
Couple
(m.kg)
2
1
temps (min)
1,2
3
10
20
30
40


FIG.1

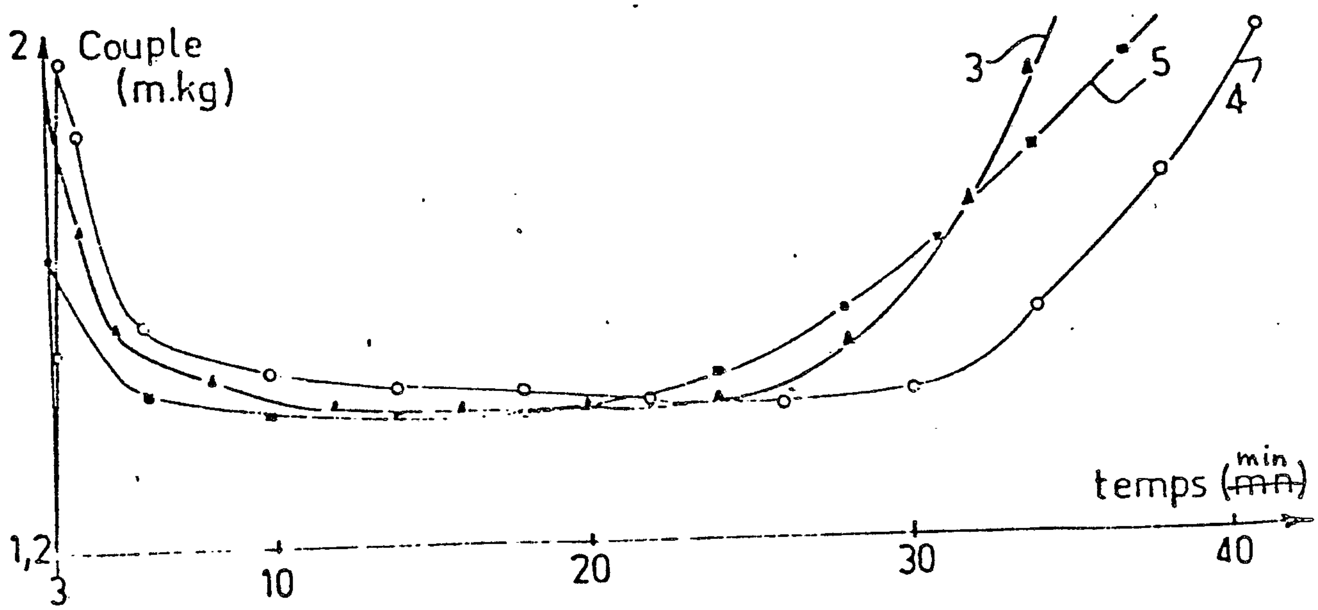

2
Couple
(m.kg)
3
5
4
temps (min)
1,2
3
10
20
30
40


FIG.2

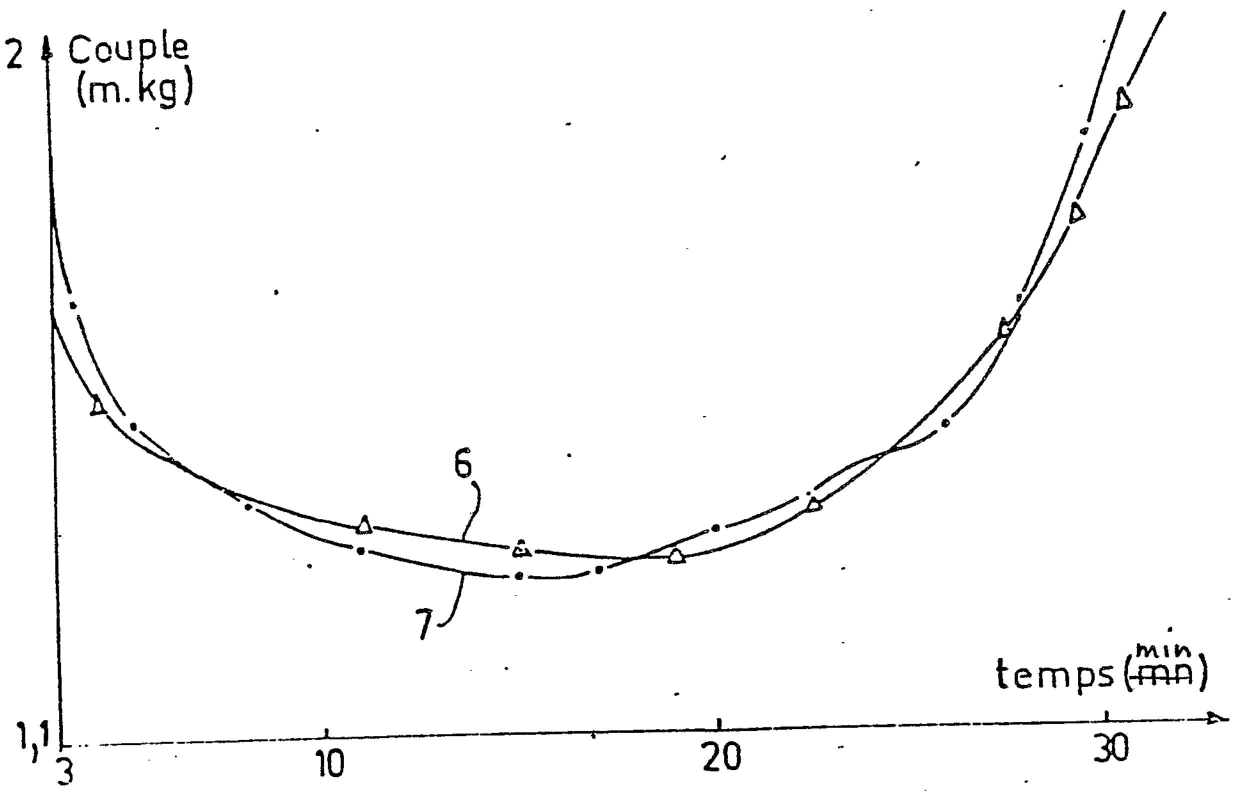
2
Couple
(m.kg)
6
7
temps (min)
1,1
3
10
20
30

FIG.3

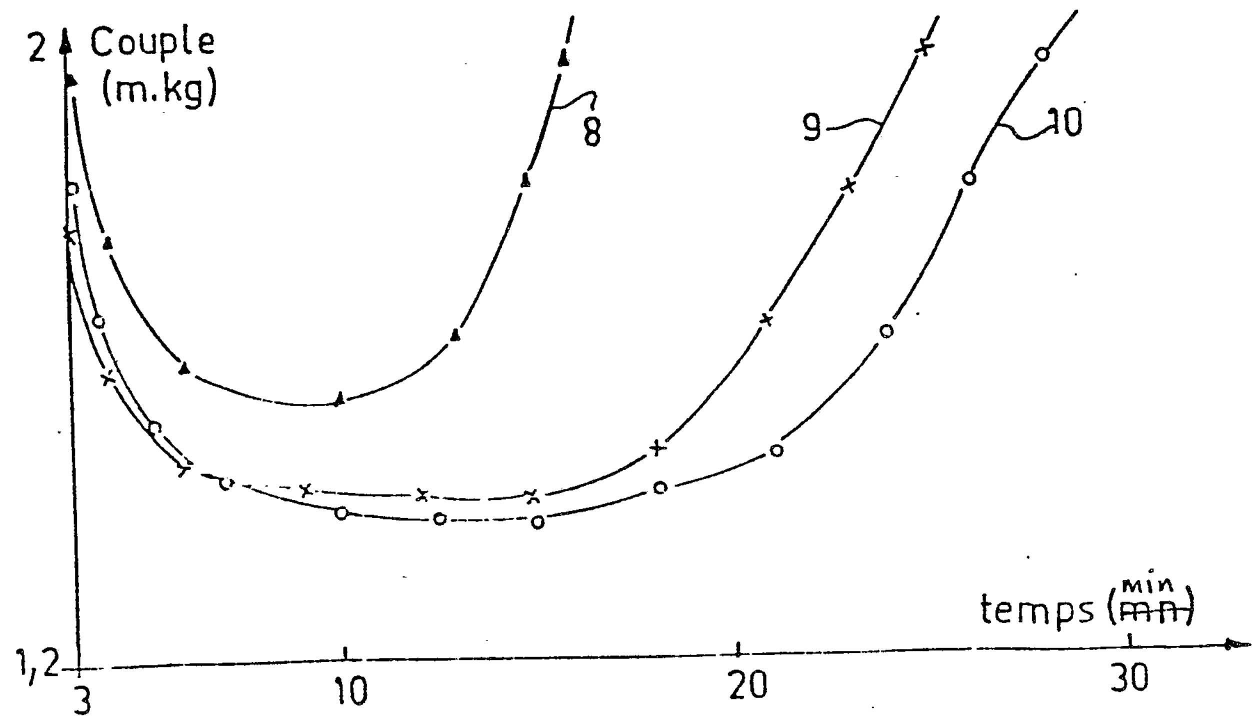
2
Couple
(m.kg)
8
9
10
temps (min)
1,2
3
10
20
30

FIG.4

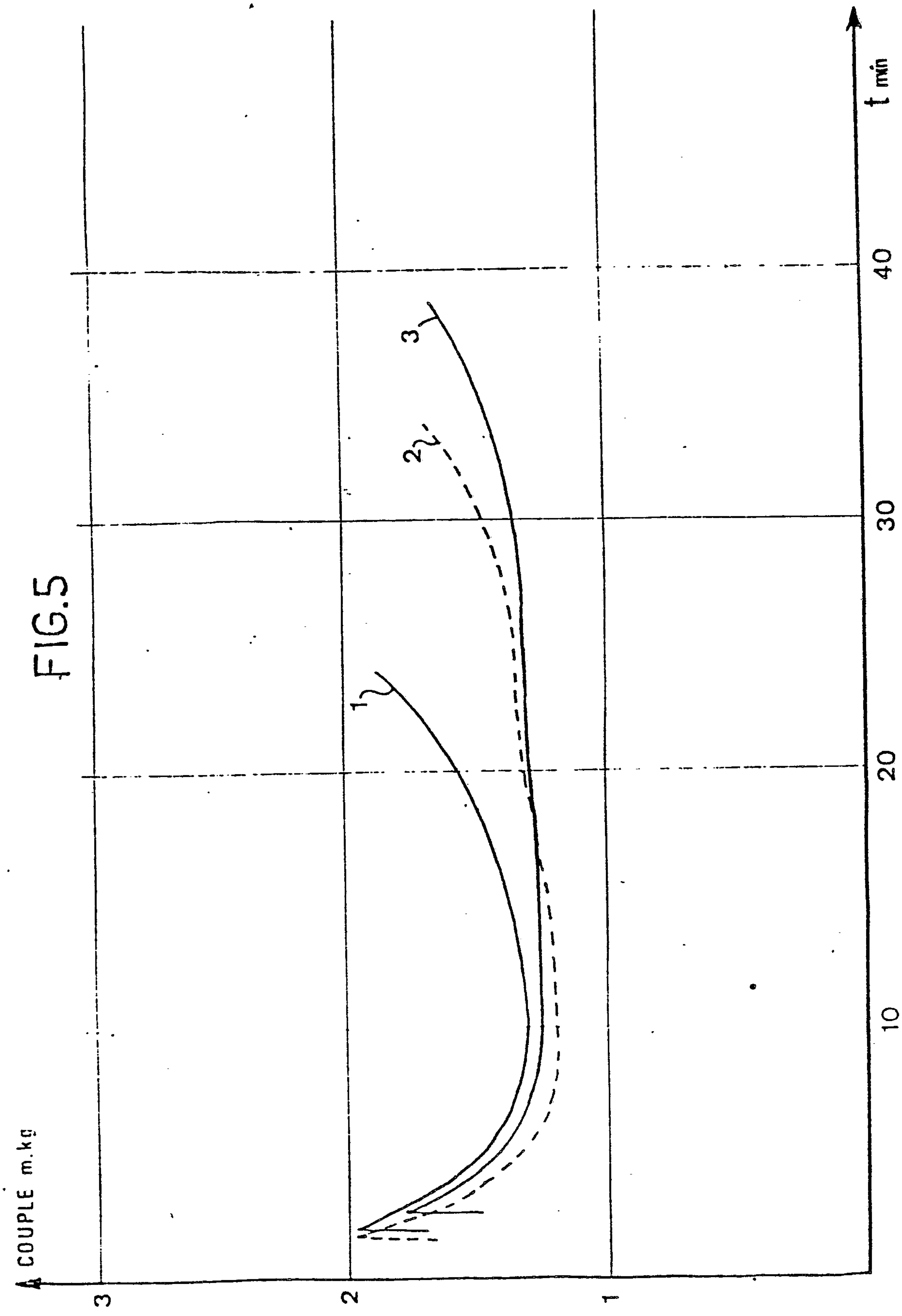


FIG.5